# EUROPEAN PATENT SPECIFICATION

(11) **EP 2 811 106 B1**
(45) Date of publication and mention of the grant of the patent: **01.08.2018**
(21) Application number: 13171045.1
(22) Date of filing: 07.06.2013
(51) Int. Cl.: E21B 6/00, E21B 7/02, F16H 57/04

(54) **Rock Drilling Machine and Method for Lubrication**
Gesteinsbohrmaschine und Verfahren zur Schmierung
Machine de forage de roches et procédé de lubrification

(43) Date of publication of application: 10.12.2014
(73) Proprietor: Sandvik Mining and Construction Oy, 33330 Tampere (FI)
(72) Inventor: Muuttonen, Timo, 33330 Tampere (FI)
(74) Representative: Sandvik

(56) References cited:
- DE-A1-102010 040 417
- GB-A- 1 209 792
- GB-A- 2 122 271
- US-A- 5 040 618
- US-A1- 2012 292 114

## Description

### Background of the invention

The invention relates to a rock drilling machine, and particularly to an arrangement for lubricating the rock drilling machine. A rotating sleeve is arranged around a shank in order to transmit rotation generated by a rotating device to the shank. The rotating sleeve and the shank are provided with a gear system for transmitting the rotation. Further, the rock drilling machine comprises a lubricating system for feeding a pressurized lubricating fluid to the gear system.

The invention further relates to a method of lubricating a rock drilling machine.

The field of the invention is defined more specifically in the preambles of the independent claims.

In mines and at other work sites, rock drilling machines are used for drilling bore holes into rock surfaces. The rock drilling machine comprises a rotating device for rotating a drilling tool during drilling. The tool is connected to a shank which is bearing mounted to a body of the drilling machine. A rotating torque generated by the rotating device is transmitted to the shank by means of a rotating sleeve arranged around the shank. Between the rotating sleeve and the shank is provided a gear system. In the gear system, a tooth contact occurs between gear teeth and, consequently, the gear system is subjected to wear. Lubricating systems have been developed for delivering lubricating oil between operating flanks of the teeth of the gear system. However, the known lubricating systems have drawbacks. Some rock drilling machines provided with lubrication systems are disclosed in documents US-5040618-A and GB-2122271-A.

### Brief description of the invention

An object of the invention is to provide a novel and improved rock drilling machine provided with a lubricating system, and a method of lubricating a rock drilling machine.

The rock drilling machine according to the invention is characterized by characterized features of the independent apparatus claim 1.

The method according to the invention is characterized by similar features. An idea of the disclosed solution is that the rock drilling machine comprises a lubricating system for feeding lubricating fluid to a gear system between a rotating sleeve and a shank and further to one or more bearings of the rotating sleeve.

An advantage of the disclosed solution is that proper lubrication is achieved for the bearings of the rotating sleeve, whereby service life can be longer and operational reliability can be improved.

According to an embodiment, the lubricating fluid is arranged to flow in the tooth contact between gears of the rotating sleeve and the shank. The produced flow of lubricating fluid is also maintained during transmission of rotation. An advantage of this embodiment is that the flow of the lubricating fluid lubricates effectively operational flank surfaces of teeth of the gears. Further, the flow of the lubricating fluid may absorb heat and transport it away from the gears. Thus, the lubricating system may also serve as a cooling system. One additional benefit may be that the flowing fluid may transport impurities away from a gear system.

According to an embodiment, the tooth contact between the first gear of the shank and the second gear of the rotating sleeve comprises operational flank surfaces between opposing teeth of the gearings. Thus, the operational flank surfaces of the opposing teeth are facing towards each other. At least one of the two opposing flank surfaces in each tooth contact is provided with at least one groove. The feed duct or another flow path of the lubricating system is in connection with the grooves, allowing the lubricating fluid to be fed to the tooth contact. In other words, at least one groove is provided in at least one of the abutting faces of a pair of splines for serving as a flow path for the lubricating fluid to provide effective lubrication and cooling effect to each spline face.

According to an embodiment, opposing teeth of the gears have flank surfaces facing towards each other. At least one of the two opposing flank surfaces in each tooth contact is provided with at least one groove. The groove is elongated and is in an axial direction.

According to an embodiment, the above-disclosed groove in the flank surface is elongated and has a first end and a second end. At least one end of the groove is open, which allows the lubricating fluid fed to the groove to flow in the groove towards the open end. The feed duct may be located in a closed end portion of the groove. Further, the open end of the groove may be located at a tool side end of the gearing and the closed end of the groove may be located on an opposite end of the gear. Then the lubricating fluid may flow towards the tool side in the groove.

According to an embodiment, the groove in the flank surface is elongated and has a first end and a second end. Both ends of the groove are open, which allows the lubricating fluid fed to the groove to flow in the groove towards the open ends. The feed duct may be located between the ends of the groove.

According to an embodiment, the groove in the flank surface is elongated and has a first end and a second end. Both ends of the groove are closed. The groove is in connection to a feed duct and to a discharge duct. The feed duct and the discharge duct are located in opposite end portions of the groove. The lubricating fluid fed from the feed duct flows in the groove towards the discharge duct. The feed duct and the discharge duct are in a transverse direction relative to a longitudinal direction of the groove, whereby the ducts may be in a radial direction or slightly angled. This embodiment offers yet another additional solution for producing a flow of lubricating fluid in the groove.

According to an embodiment, operational flank surfaces of the teeth of the second gear in the rotation sleeve are provided with such grooves.

According to an embodiment, the lubricating fluid lubricates at first one or more bearings of the rotating sleeve and only thereafter is the lubricating fluid arranged to flow to the gearing system for lubricating opposing flank surfaces of teeth of the gears. The pressure of the lubricating fluid is still high enough when entering the bearing space, and further, the lubricating fluid does not contain impurities when at first entering the bearing space. Thanks to this embodiment, proper lubrication of the bearings of the rotating sleeve can be ensured.

According to an embodiment, the lubricating fluid is fed to the bearing space surrounding the rotating sleeve through at least one bearing supporting the rotating sleeve. Then at least one feed duct of the lubricating system is located at the bearing of the rotating sleeve. When the lubricating fluid is fed through a structure of the bearing, proper lubrication of the bearing can be ensured in all circumstances.

According to an embodiment, the lubricating fluid is fed to the bearing space surrounding the rotating sleeve through at least one bearing in a radial direction.

According to an embodiment, the lubricating fluid is fed to the bearing space surrounding the rotating sleeve through at least one bearing in an axial direction.

According to an embodiment, the rotating sleeve located in the bearing space is supported against the body by means of a front bearing and a rear bearing. The front bearing is located at a tool side end of the sleeve and the rear bearing at an opposite end. The lubricating fluid is fed through the rear bearing. Then at least one feed duct of the lubricating system is located at the rear bearing. This embodiment ensures effective lubrication of the rear bearing, which is subjected to great stress and wear during drilling.

According to an embodiment, the rotating sleeve located in the bearing space is supported against the body by means of a front bearing and a rear bearing. The front bearing is located at a tool side end of the sleeve and the rear bearing at an opposite end. The lubricating fluid is fed through the front bearing.

According to an embodiment, the rotating sleeve located in the bearing space is supported against the body by means of a front bearing and a rear bearing. The front bearing is located at a tool side end of the sleeve and the rear bearing at an opposite end. The lubricating fluid is fed through the front and rear bearings.

According to an embodiment, the rotating sleeve located in the bearing space is supported against the body by means of a front bearing and a rear bearing. The front bearing is located at a tool side end of the sleeve and the rear bearing at an opposite end. The lubricating fluid is fed to the bearing space surrounding the rotating sleeve through a middle channel provided between the front bearing and the rear bearing.

According to an embodiment, the rotating sleeve is provided with several fluid ducts, channels, grooves or other flow paths for conveying the lubricating fluid from the bearing space of the rotating sleeve to the tooth contact between the first gear of the shank and the second gear of the rotating sleeve. According to this embodiment, the lubricating fluid lubricates at first the bearings located in the bearing space of the rotating sleeve, and subsequently it lubricates a gear system. Thus, the lubricating fluid is utilized in at least two successive places requiring effective lubrication.

According to an embodiment, the rock drilling machine is provided with a rear space on a side of the rear end of the shank. One or more gas feed ducts are connected to the rear space, allowing the rear space to be pressurized by feeding a pressurized gas to the rear space. The pressurized gas is allowed to leak from the rear space towards the first end of the shank, whereby a gas flow flushes the lubricating fluid of the lubricating system towards the first end of the shank. The fed gas flows to collecting ducts and means of the lubricating system, whereby the fed gas assists a returning flow of the lubricating fluid towards a tank or a corresponding reservoir of the lubricating system.

According to an embodiment, the rock drilling machine is provided with a circulation lubrication system. Then the lubricating fluid is circulated in a lubricating circuit comprising at least: a tank, a pump, feed ducks and collecting ducks. The lubricating circuit is separate from a hydraulic circuit of the rock drilling machine. The lubricating fluid pressurized by the pump is fed to a bearing space of the rotating sleeve and is circulated via feed ducks to defined lubricating points in the rock drilling machine. Finally the lubricating fluid is collected by the collecting ducts and is returned to the tank of the system so that it can be reused. The lubricating fluid may be filtered during the circulation.

According to an embodiment, the lubrication fluid is also arranged to flow through a gear box of the rotating device. Thus, the lubricating fluid may lubricate bearings of the rotating device, a gear system between the rotating device and an outer surface of the rotating sleeve, and any other transmission members inside the gear box.

According to an embodiment, the lubrication fluid is also used for lubricating one or more bearings of the shank. At least some of the fed lubrication fluid may be arranged to flow through a slide bearing of the shank. Before reaching the shank bearing the lubricating fluid has already circulated through the bearing space of the rotation sleeve and the gearing system. When the lubricating fluid leaves the shank bearing, it flows towards a tank of a circulation lubrication system.

According to an embodiment, the lubricating fluid fed to the bearing space is oil. The fed oil lubricates one or more bearings of a rotating sleeve and is thereafter led forward to lubricate a gearing system between the rotating sleeve and a shank. A flushing gas, such as pressure air, is fed to a rear space located at a rear end of the shank. At least some of the lubricating oil and the flushing gas is allowed to be mixed for producing an oil mist. The oil mist may be led forward to lubricate a gearing system between the rotating sleeve and a rotating device, bearings of the rotating device, bearings of the shank and possibly any other lubricating points located around the shank. The oil and the oil mist may be collected after being circulated through the designed lubricating points. This embodiment provides effective circulation of the lubrication fluid.

According to an embodiment, the lubricating fluid fed to the bearing space is oil mist. The fed oil mist lubricates one or more bearings of a rotating sleeve and is thereafter led forward to lubricate a gearing system between the rotating sleeve and a shank. A flushing gas, such as oil free pressure air, is fed to a rear space located at a rear end of the shank. The flushing gas may assist the oil mist to flow towards succeeding lubricating points. The oil mist may be led forward to lubricate a gearing system between the rotating sleeve and a rotating device, bearings of the rotating device, bearings of the shank and possibly any other lubricating points locating around the shank. The oil mist may be collected after being circulated through the designed lubricating points. This embodiment provides effective circulation of the lubrication fluid.

According to an embodiment, the lubricating fluid is fed to a bearing space surrounding the rotating sleeve under a pressure of 12 bar. The pressure of the lubricating fluid may be 10 to 12 bar. This pressure level is enough for causing the fed lubricating fluid to flow through the feed ducts to the predetermined lubrication points.

According to an embodiment, the lubricating fluid is oil.

According to an embodiment, the lubricating fluid is transmission oil.

According to an embodiment, the lubricating fluid is oil mist comprising pressurized gas, such as air, and oil.

According to an embodiment, the lubricating fluid is isolated from a hydraulic system and hydraulic fluid in the hydraulic system.

According to an embodiment, the lubricating fluid fed to the rock drilling machine is collected by collecting means comprising at least one reservoir. Thus, handling of the used lubricating fluid is controlled, whereby possible problems at a work site caused by the used lubricating fluid can be prevented.

According to an embodiment, the rotating sleeve comprises two components, namely a first sleeve and a second sleeve. The sleeves are arranged within each other. The second sleeve is smaller in size and it is arranged inside the first sleeve. Between the first sleeve and the second sleeve are provided gears for transmitting rotation between the sleeves. Further, an outer surface of the outer first sleeve is provided with a gear for receiving torque from a rotating device. On an inner surface of the second sleeve is provided a gear, which transmits torque to the shank. The gearing, or drive coupling, between the inner second sleeve and the shank allows longitudinal movement of the shank along the axis of rotation. Because to this longitudinal movement, the gears of the second sleeve and the shank are subjected to great stresses and wear. When the rotating sleeve is formed of two components, the inner sleeve can be replaced when worn out.

According to an embodiment, the rotating sleeve comprises two components arranged within each other, namely an outer first sleeve and an inner second sleeve. The second sleeve may be made of slide bearing material. For bearings the slide bearing material may be bronze.

According to an embodiment, the rotating sleeve comprises two components arranged within each other, namely an outer first sleeve and an inner second sleeve. The inner second sleeve has splines which are provided with elongated grooves in an axial direction of the sleeve. The grooves are open at their front end, rear end or both ends. Alternatively, ends of the grooves are closed and the groove is in connection to a feed duct and a discharge duct. Thus, the grooves are not closed when flank surfaces of the splines are pressed against abutting splines of a shank. Then the grooves may serve as flow paths for a pressurized lubricant fluid fed to the grooves, whereby the flow of the lubricating fluid may provide effective lubrication and cooling.

According to an embodiment, the rock drilling machine is a down-the-hole (DTH) drilling machine comprising a rotating unit and a percussion unit arranged at opposite ends of a tool.

According to an embodiment, the rock drilling machine is a rotary drilling machine comprising a rotating unit. The rotary drilling machine is without any percussion device.

According to an embodiment, the rock drilling machine is a top hammer drilling machine comprising a rotating device and a percussion device located at a rear end of the tool. A rear end of the shank is provided with an impact surface for receiving impact pulses generated by the percussion device.

The above-disclosed embodiments can be combined in order to form suitable solutions provided with necessary features disclosed.

### Brief description of the figures

Some embodiments are described in more detail in the accompanying drawings, in which
Figure 1 is a side view showing a rock drilling machine arranged on a feed beam,
Figure 2 is a schematic sectional view showing a front portion of a rock drilling machine comprising a percussion device,
Figure 3 is a schematic sectional view showing a front portion of a rock drilling machine serving as a rotating unit,
Figure 4 is a schematic sectional view showing a front portion of a rock drilling machine provided with an alternative lubricating system,
Figure 5 is a schematic sectional view showing a detail of a rock drilling machine and a feed flow of a lubricating fluid through a transmission box to a bearing space,
Figure 6 is a schematic sectional view showing a bearing space of a rotating sleeve and a feed of a lubricating fluid thereto for lubricating bearings,
Figure 7 is a schematic view showing a detail of an open-ended groove in a flank surface of a tooth or spline of a gear,
Figure 8 is a schematic view showing a detail of a closed-ended groove and fluid channels in a flank surface of a tooth or spline of a gear,
Figure 9 is a schematic sectional and detailed view of Figures 2, 3 and 4 in direction A, showing means for feeding a lubricating fluid to axial grooves of an inner sleeve of a rotating sleeve,
Figure 10 is a schematic sectional and detailed view of Figures 5 and 6 in direction B, showing means for feeding a lubricating fluid to axial grooves of an inner sleeve of a rotating sleeve, and
Figure 11 is a schematic and detailed view showing a flow of lubricant fluid through apertures in a rotating sleeve towards a gear box and additional lubricating points.

For the sake of clarity, the figures show some embodiments of the disclosed solution in a simplified manner. In the figures, like reference numerals identify like elements.

### Detailed description of some embodiments

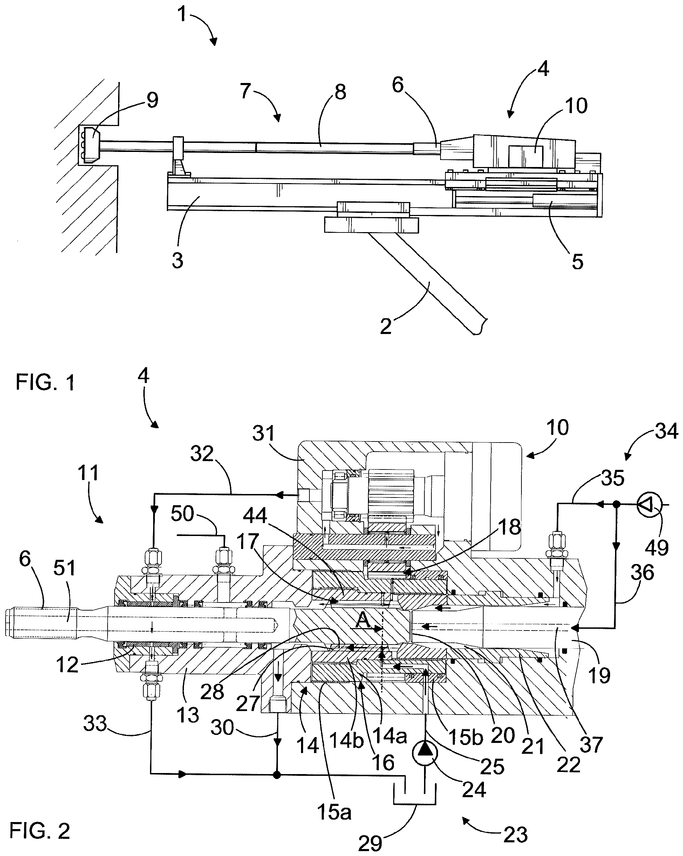

Figure 1 shows a feasible rock drilling unit 1 which may be connected by means of a boom 2 to a movable carrier, which is not shown. The drilling unit 1 may comprise a feed beam 3 and a rock drilling machine 4 supported on it. The rock drilling machine 4 may be moved on the feed beam 3 by means of a feed device 5. The rock drilling machine 4 comprises a shank 6 at a front end of the rock drilling machine 4 for connecting a tool 7. The tool 7 may comprise one or more drill rods 8 and a drill bit 9 located at a distal end of the tool 7. The rock drilling machine 4 further comprises a rotating device 10 for rotating the shank 6 and the tool 7 connected to the shank 6. At a drilling site, one or more drill holes are drilled with the drilling unit 1. The drill holes may be drilled in a horizontal direction, as shown in Figure 1, or in a vertical direction.

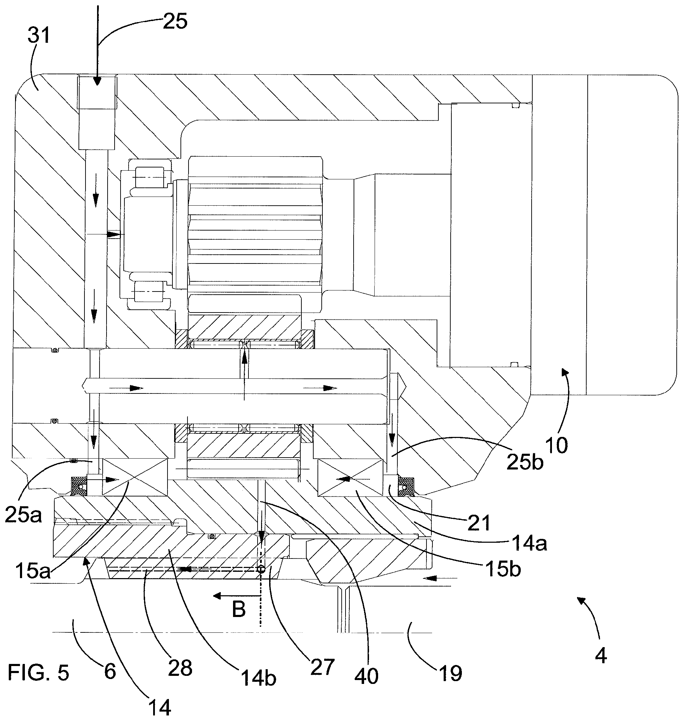

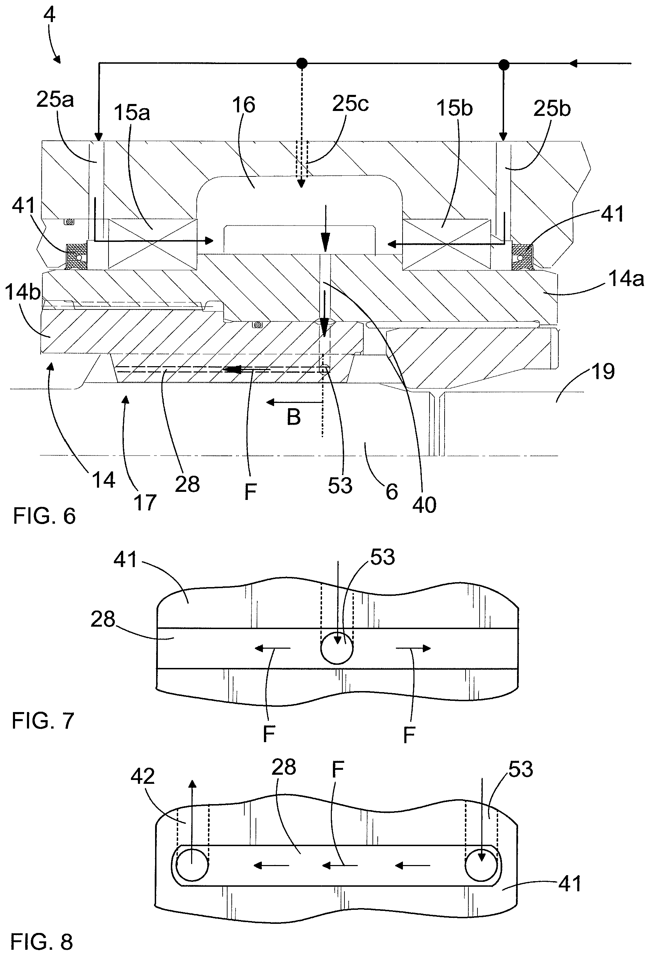

Figure 2 discloses a front end 11 of a rock drilling machine 4. A shank 6 is supported by means of a shank bearing 12 to a body 13 of the rock drilling machine 4. Around the shank 6 is provided a rotating sleeve 14, which may comprise two sleeve-like components arranged inside one another, namely an outer first sleeve 14a and an inner second sleeve 14b. The rotating sleeve 14 is supported against the body 13 by means of at least one bearing 15 arranged in a bearing space 16. There may be two bearings, namely a front bearing 15a and a rear bearing 15b. The front bearing 15a may be a slide bearing, as in Figure 2, or a roller bearing as shown in Figures 5 and 6. Between an inner surface of the rotating sleeve 14 and an outer surface of the shank 6 is provided a first gear system 17 and, further, a second gearing system 18 is provided between an outer surface of the rotating sleeve 14 and a rotating device 10. A percussion piston 19 is arranged on a same axial line as the shank 6. The percussion piston 19 has a front end provided with an impact surface 20. The percussion piston 19 is arranged to strike against a rear end of the shank 6 so that impact pulses are generated on the shank 6. The opposite ends of the shank 6 and the percussion piston 19 are located in a rear space 21. An axial bearing 22 may be located in the rear space 21 for affecting an axial position of the shank 6.

The rock drilling machine 4 comprises a lubricating system 23 for lubricating at least the rear bearing 15b of the rotating sleeve 14 and the first gear system 17, too. The lubricating system 23 may comprise a lubricating pump 24 for pressurizing a lubricating fluid and one or more feed ducts 25 for conveying the lubricating fluid to the bearing space 16. The lubricant fluid may be fed through the rear bearing 15b, whereby proper lubrication for the rear bearing 15b is ensured. The flow of the lubricating fluid continues its flow through ducts in the outer first sleeve 14a and in the inner second sleeve 14b towards the gear system 17. Some examples of these ducts are shown in Figures 5 to 9. The second sleeve 14b is provided with a gear 44 formed on an inner surface of the sleeve component. The gear 44 comprises several teeth 27 or splines provided with flank surfaces. At least operational flank surfaces transmitting torque during normal forward drilling have at least one axial groove 28, which is connected to ducts in the rotating sleeve 14. Thus, the lubricating fluid may enter the groove 28 and flow through it. One portion of the lubricating fluid leaving the groove 28 may be collected and returned to a collecting reservoir 29 through one or more collecting ducts 30. Another portion of the lubricating fluid leaving the groove 28 may be led towards a transmission box 31 wherein it may lubricate bearings and gears. Ducts needed for circulating the lubricating fluid may be formed inside the transmission box 31 at desired lubrication points. Further, the lubricating fluid may be led through a connecting duct 32 to the bearing 12 of the shank 6. After lubricating the shank bearing 12 the lubricating fluid may flow through a collecting duct 33 towards the collecting reservoir 29. Thus, the lubricating fluid may circulate at least via bearings of the rotating sleeve, gearings systems, transmission box and shank bearings.

Figure 2 further discloses a flushing system 34 allowing a pressurized flushing gas, typically oil free pressure air, to be fed to the rear space 21. The flushing gas may be produced by a compressor 49. The flushing gas may be fed through a first flushing duct 35 directly to the rear space 21. Further, the flushing gas may also be fed from a second flushing duct 36 to an axial flushing duct 37 formed in the percussion piston 19. The axial flushing duct 37 is open on the impact surface 20, whereby the flushing gas may flush the impact surface 20 and possibly also the rear end of the shank 6. The flushing gas then enters the rear space 21. The flushing gas fed from ducts 35, 36 may pressurize the rear space 21. The flushing gas may leak towards the shank 6, whereby the flushing gas may mix with the lubricating fluid, such as oil, and may then form an oil mist. The pressurized flushing gas may improve the circulation of the lubricating fluid.

It is to be mentioned that in Figures 2 to 8 some arrows are shown to demonstrate flows of the lubricating fluid and flows of the flushing gas.

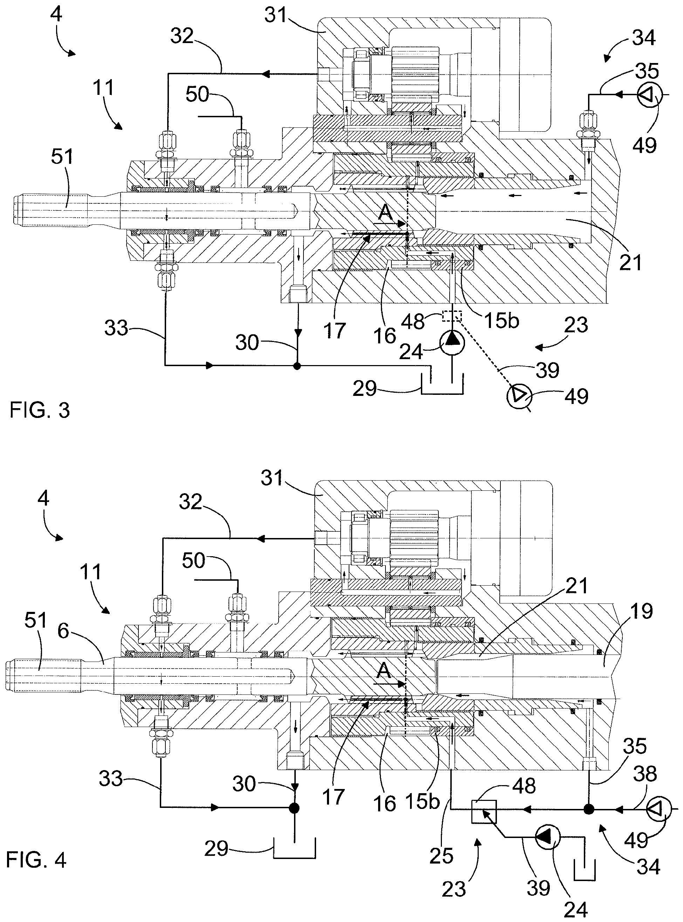

Figure 3 discloses a rotating unit, also known as a rotating head. This kind of rock drilling machine 4 may be used in down-the-hole (DTH) drilling and in rotation drilling. The rotating unit comprises no percussion device, but instead it only serves to rotate a shank 6 and a tool connected to the shank. The basic structure of a front end 11 of the drilling machine 4 may be the same as shown in Figure 2. Also the lubricating system 23 allowing lubrication for the bearing 15b of the rotating sleeve 14 and for the gear system 17 between the rotating sleeve 14 and the shank 6 may correspond to that shown in Figure 2. In addition, the lubricating fluid may be circulated further to the transmission means of the rotating device and to the shank bearings, as discussed in connection with Figure 2. However, the flushing system 34 differs from the solution of Figure 2 since the rotation unit does not comprise any percussion piston provided with flushing ducts. A flushing gas, such as oil free pressure air, may be fed to a rear space 21 from a flushing connection 35. The flushing gas may mix with the lubricating fluid exiting from a gear system 17 and the pressure of the flushing gas may assist in conveying the lubricating fluid forward.

Figure 4 discloses an alternative rock drilling machine 4 which has the same basic front end 11 structure as that shown in the solutions of Figures 2 and 3. However, the lubricating system 23 and the flushing system 34 have some differences. A flushing gas, such as oil free pressure air, is fed from a duct 38 and the flushing gas is led through the flushing duct 35 to the rear space 21. The flushing gas is also led to the lubricating system 23 where lubricating oil is fed from an oil duct 39 to the flow of the flushing fluid by means of a mixing device 48 and the produced oil mist is then led via the feed duct 25 towards the lubricating points. After being circulated at the desired lubricating points, the lubricating fluid is collected to the collecting reservoir 29.

Figure 3 show in broken line, an alternative solution wherein oil mist is produced by means of the mixing device 48 and the produced oil mist is fed via the feed duct to the bearing space. The disclosed, alternative configuration may also be utilized in Figure 2. On the other hand, in Figure 4 the lubricating system 23 may alternatively be as shown in Figures 2 and 3.

Figures 2 to 4 also disclose a feed duct 50 for feeding a flushing fluid to a drill hole through channels 51 in the shank 6 and through channels in the tool and the drill bit. The drill hole flushing system is separate from the flushing system 34 disclosed above.

Figure 5 shows a detail of a rock drilling machine 4 having the same basic principles as discussed above. The feed duct 25 is arranged in connection with the transmission box 31. Suitable ducts are formed to allow the fed lubricating fluid to lubricate several lubricating points in the transmission box 31 and to also enter through feed ducts 25a and 25b into the bearing space 21 of the rotating sleeve 14. The embodiment of Figure 5 differs from the ones shown in Figures 2 to 4 in that both bearings 15a and 15b are lubricated by directing the lubricating fluid through them in an axial direction. In Figures 2 to 4 only the rear bearing 15b is lubricated and the lubricating fluid is fed in a transverse or radial direction. The lubricating fluid flows through ducts 40, 53 formed in the rotating sleeve 14 to the grooves 28 in the flank surfaces of the teeth 27.

Figure 6 discloses a feed of the lubricant fluid via feed ducts 25a and 25b, which are at axial ends of the bearing space 16. Alternatively, there may be a middle feed duct 25c between the bearings 15a, 15b. Figure 6 further discloses seals 41 for sealing the bearing space 16 to the rotating sleeve 14. A flow F of the flushing fluid fed to the groove 28 can be clearly seen in the enlarged Figure 6. The groove 28 in Figure 6 is open at its front end and the rear end is closed. The flushing fluid enters the groove 28 from the duct 53 and flows F towards the tool side end of the rock drilling machine 4. It is also possible to form grooves 28 having open rear ends and closed front ends.

In Figure 7, a groove 28 of a flank surface 41 of a spline or tooth is open at its both ends, whereby the lubricating fluid flows F in the groove 28 in both axial directions.

In Figure 8, a groove 28 is closed at its both ends. A feed duct 53 is located at a first end of the groove 28 and a discharge duct 42 is at a second end of the groove 28. The lubricating fluid fed from the duct 53 flows F towards the discharge duct 41 in the groove 28.

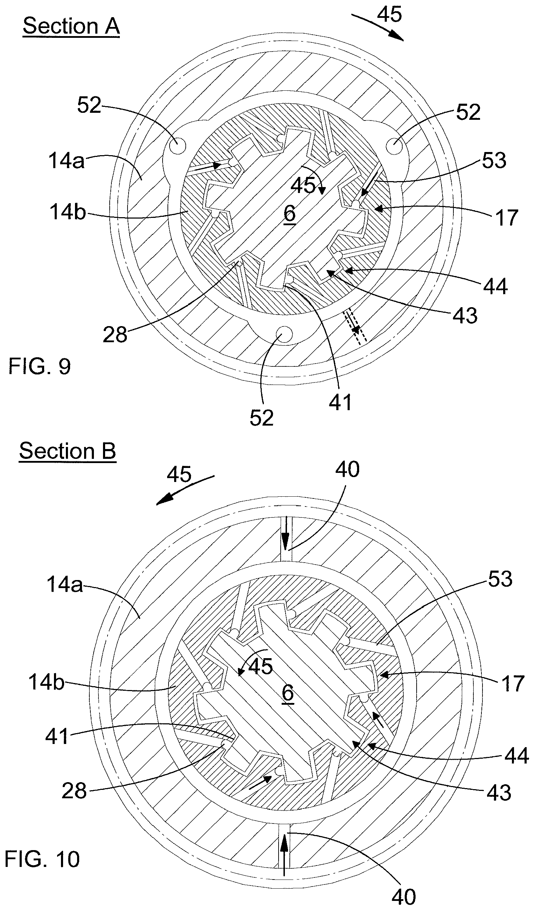

Figure 9 shows, in section, features already discussed above. In addition, in Figure 9 a first gear 43 on an outer surface of the shank 6 and a second gear 44 on an inner surface of the rotating sleeve 14 can be seen clearly. A rotating direction during normal drilling is shown by arrows 45. As can be seen, the grooves 28 are located on the operational flank surfaces 41 of the teeth of the second gear 44. The lubricating fluid is fed through ducts 52 to the gear system.

Figure 10 shows, in section, a detailed view of Figures 5 and 6 and also discloses features discussed above. A lubricating fluid is fed through ducts 40, 53 of the rotating sleeve 14 to the gear system.

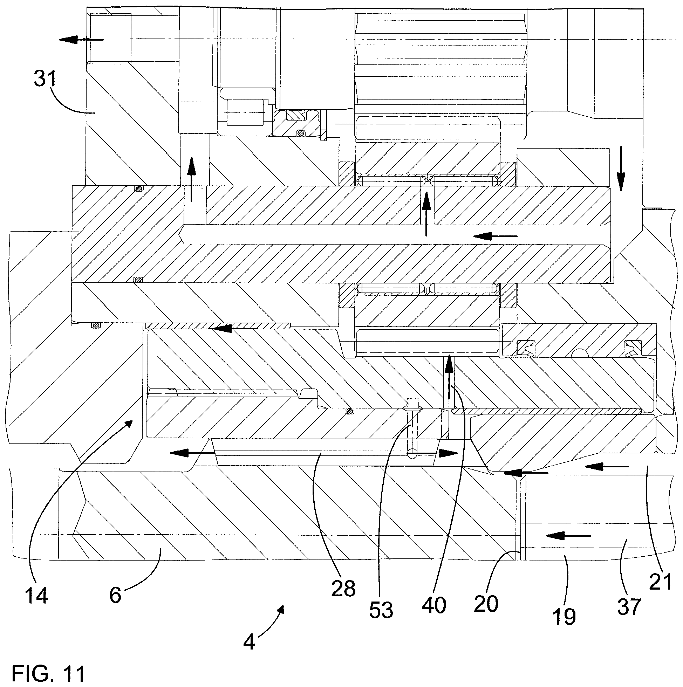

Figure 11 is a schematic and detailed view showing a flow of lubricating fluid through ducts 40 in a rotating sleeve towards a gear box and additional lubricating points. This solution applies to previous Figures 2, 3, and 4.

The drawings and the related description are only intended to illustrate the idea of the invention. In its details, the invention may vary within the scope of the claims.

## Claims

1. A rock drilling machine comprising:
a body (13);
a shank (6), which is bearing mounted to the body (13) by means of at least one first bearing (12), and which shank (6) comprises a first end and a second end, the first end being provided with connecting members for connecting a drilling tool (7);
a first gear (43) on an outer surface of the shank (6);
at least one rotating sleeve (14) around the shank (6);
a second gear (44) on an inner surface of the rotating sleeve (14), the second gear (44) being in a tooth contact with the first gear (43);
a third gear on an outer surface of the rotating sleeve (14);
a rotating device (10) comprising at least one rotating motor for generating rotation and transmission elements for transmitting the rotation to the third gear;
at least one second bearing (15) for bearing mounting the rotating sleeve (14) rotationally inside a bearing space (16) in the body (13); and
a lubricating system (23) comprising at least one feed duct (25) for feeding a pressurized lubricating fluid to the tooth contact between the first gear (43) and the second gear (44); wherein the tooth contact between the first gear (43) and the second gear (44) comprises operational flank surfaces (41) between opposing teeth;
at least one flank surface (41) in each tooth contact is provided with at least one groove (28); and
the feed duct (25) of the lubricating system is in connection with the grooves (28), allowing the lubricating fluid to be fed to the tooth contact and to flow in the at least one groove (28) of the flank surface (41)
wherein the groove (28) in the flank surface (41) is elongated and has ends; **characterized in that** at least one end of the groove (28) is open; and the lubricating fluid fed to the groove (28) is arranged to flow (F) in the groove (28) towards the at least one open end.

2. The rock drilling machine as claimed in claim 1, **characterized in that**
the at least one feed duct (25) of the lubricating system (23) is connected to the bearing space (16) surrounding the rotating sleeve (14); and
the lubricating fluid is arranged to lubricate the at least one second bearing (15) of the rotating sleeve (14).

3. The rock drilling machine as claimed in claim 1 or 2, **charac**- **terized** in that
the rotating sleeve (14) comprises a first sleeve (14a) and a second sleeve (14b);
the second sleeve (14b) is arranged inside the first sleeve (14a);
between the first sleeve (14a) and the second sleeve (14b) gears are provided for transmitting rotation between the sleeves;
the third gear is on an outer surface of the first sleeve (14a); and the second gear (44) is on an inner surface of the second sleeve (14b).

4. The rock drilling machine as claimed in any one of the preceding claims, **characterized in that**
the feed duct (25) of the lubricating system (23) is located at the second bearing (15), allowing the lubricating fluid to be fed through the second bearing (15) of the rotating sleeve (14).

5. The rock drilling machine as claimed in claim 4, **characterized in that**
the rotating sleeve (14) is provided with several fluid ducts (40) for conveying the lubricating fluid from the second bearing (15) to the tooth contact between the first gear (43) and the second gear (44).

6. The rock drilling machine as claimed in any one of the preceding claims, **characterized in that**
the flank surfaces (41) of the teeth of the second gear (44) are provided with such grooves (28).

7. A method of lubricating a rock drilling machine,
the rock drilling machine (4) comprising: a body (13); a shank (6) for connecting a drilling tool (7); a rotating sleeve (14) around the shank (6); a rotating device (10) for producing rotation; gears for transmitting the rotation from the rotation device (10) to the rotating sleeve (14) and further to the shank (6);
and the method comprises feeding a pressurized lubricating fluid to a tooth contact between gears of the shank (6) and the rotating sleeve (14);
providing at least one flank surface (41) in each tooth contact with at least one groove (28), wherein the groove (28) in the flank surface (41) is elongated and has ends, and wherein at least one end of the groove (28) is open; and
producing a flow of lubricating fluid in the at least one groove (28) of the tooth contact between gears and maintaining the flow during transmission of rotation, whereby the flow of the lubricating fluid lubricates operational flank surfaces (41) of teeth of the gears and flows in the groove (28) towards the at least one open end.

8. The method as claimed in claim 7, **characterized by** feeding the lubricating fluid from a separate lubricating system (23) to a bearing space (16) in the body (13), and inside which bearing space (16) the rotating sleeve (14) is bearing mounted rotationally; and
lubricating by means of the lubricating fluid at least one bearing (15) of the rotating sleeve (14).

9. The method as claimed in claim 7 or 8, **characterized by** feeding the lubricating fluid through at least one bearing (15) supporting the rotating sleeve (14).

10. The method as claimed in claim 9, **characterized by** feeding the lubricating fluid through a rear bearing (15b) located in a rear end portion of the rotating sleeve (14) and being at an end opposite relative to the tool (7).

## Patentansprüche

1. Gesteinsbohrmaschine, umfassend:
einen Körper (13);
einen Schaft (6), der mittels mindestens eines ersten Lagers (12) gelagert an dem Körper (13) montiert ist, und welcher Schaft (6) ein erstes Ende und ein zweites Ende umfasst, wobei das erste Ende mit Verbindungsgliedern zum Verbinden eines Bohrwerkzeugs (7) versehen ist;
ein erstes Zahnrad (43) auf einer äußeren Oberfläche des Schafts (6);
mindestens eine rotierende Muffe (14) um den Schaft (6);
ein zweites Zahnrad (44) auf einer inneren Oberfläche der rotierenden Muffe (14), wobei das zweite Zahnrad (44) in einem Zahnkontakt mit dem ersten Zahnrad (43) steht;
ein drittes Zahnrad auf einer äußeren Oberfläche der rotierenden Muffe (14);
eine Rotationsvorrichtung (10), die mindestens einen rotierenden Motor zum Generieren von Rotationen und Übertragungselemente zum Übertragen der Rotation auf das dritte Zahnrad umfasst;
mindestens ein zweites Lager (15), um die rotierende Muffe (14) rotierbar innerhalb eines Lagerraums (16) in dem Körper (13) gelagert zu montieren; und
ein Schmiersystem (23), umfassend mindestens einen Zuführkanal (25) zum Zuführen eines mit Druck beaufschlagten Schmierfluids zu dem Zahnkontakt zwischen dem ersten Zahnrad (43) und dem zweiten Zahnrad (44);
wobei
der Zahnkontakt zwischen dem ersten Zahnrad (43) und dem zweiten Zahnrad (44) funktionelle Flankenoberflächen (41) zwischen gegenüberliegenden Zähnen umfasst;
mindestens eine Flankenoberfläche (41) in jedem Zahnkontakt mit mindestens einer Nut (28) versehen ist; und
der Zuführkanal (25) des Schmiersystems in Verbindung mit den Nuten (28) steht, was es dem Schmierfluid erlaubt, zu dem Zahnkontakt zugeführt zu werden und in der mindestens eine Nut (28) der Flankenoberfläche (41) zu fließen,
wobei die Nut (28) der Flankenoberfläche (41) länglich ist und Enden aufweist;
**dadurch gekennzeichnet, dass**
mindestens ein Ende der Nut (28) offen ist; und
das Schmierfluid, das der Nut (28) zugeführt wird, angeordnet ist, um in der Nut hin zu dem mindestens einem offenen Ende (28) zu fließen (F).

2. Gesteinsbohrmaschine nach Anspruch 1, **dadurch gekennzeichnet, dass**
der mindestens eine Zuführkanal (25) des Schmiersystems (23) mit dem Lagerraum (16), der die rotierende Muffe (14) umgibt, verbunden ist; und
das Schmierfluid angeordnet ist, um das mindestens eine zweite Lager (15) der rotierenden Muffe (14) zu schmieren.

3. Gesteinsbohrmaschine nach Anspruch 1 oder 2, **dadurch gekennzeichnet, dass**
die rotierende Muffe (14) eine erste Muffe (14a) und eine zweite Muffe (14b) umfasst;
die zweite Muffe (14b) innerhalb der ersten Muffe (14a) angeordnet ist; zwischen der ersten Muffe (14a) und der zweiten Muffe (14b) Zahnräder bereitgestellt sind, um Rotationen zwischen den Muffen zu übertragen,
das dritte Zahnrad auf einer äußeren Oberfläche der ersten Muffe (14a) liegt; und das zweite Zahnrad (44) auf einer inneren Oberfläche der zweiten Muffe (14b) liegt.

4. Gesteinsbohrmaschine nach einem der vorstehenden Ansprüche, **dadurch gekennzeichnet, dass**
der Zuführkanal (25) des Schmiersystems (23) sich an dem zweiten Lager (15) befindet, was es dem Schmierfluid erlaubt, durch das zweite Lager (15) der rotierenden Muffe (14) zugeführt zu werden.

5. Gesteinsbohrmaschine nach Anspruch 4, **dadurch gekennzeichnet, dass**
die rotierende Muffe (14) mit mehreren Fluidkanälen (40) versehen ist, um das Schmierfluid von dem zweiten Lager (15) zu dem Zahnkontakt zwischen dem ersten Zahnrad (43) und dem zweiten Zahnrad (44) zu fördern.

6. Gesteinsbohrmaschine nach einem der vorstehenden Ansprüche, **dadurch gekennzeichnet, dass**
die Flankenoberflächen (41) der Zähne des zweiten Zahnrads (44) mit solchen Nuten (28) versehen sind.

7. Verfahren zum Schmieren einer Gesteinsbohrmaschine,
wobei die Gesteinsbohrmaschine (4) umfasst: einen Körper (13); einen Schaft (6) zum Verbinden eines Bohrwerkzeugs (7); eine rotierende Muffe (14) um den Schaft (6); eine Rotationsvorrichtung (10) zum Erzeugen von Rotationen, Zahnräder zum Übertragen der Rotationen von der Rotationsvorrichtung (10) auf die rotierende Muffe (14) und weiter auf den Schaft (6);
und wobei das Verfahren umfasst:
Zuführen eines mit Druck beaufschlagten Schmierfluids zu einem Zahnkontakt zwischen Zahnrädern des Schafts (6) und der rotierenden Muffe (14);
Versehen mindestens einer Flankenoberfläche (41) in jedem Zahnkontakt mit mindestens einer Nut (28), wobei die Nut (28) in der Flankenoberfläche (41) länglich ist und Enden aufweist, und wobei mindestens ein Ende der Nut (28) offen ist; und
Erzeugen eines Flusses von Schmierfluid in der mindestens einen Nut (28) des Zahnkontakt zwischen Zahnrädern und Beibehalten des Flusses während der Übertragung von Rotationen, wobei der Fluss des Schmierfluids funktionelle Flankenoberflächen (41) von Zähnen der Zahnräder schmiert und in der Nut (28) hin zu dem mindestens einen offenen Ende fließt.

8. Verfahren nach Anspruch 7, **gekennzeichnet durch**
Zuführen des Schmierfluids von einem separaten Schmiersystem (23) zu einem Lagerraum (16) in dem Körper (13), und innerhalb welches Lagerraums (16) die rotierende Muffe (14) rotierbar gelagert montiert ist; und
Schmieren mindestens eines Lagers (15) der rotierenden Muffe (14) mittels des Schmierfluids.

9. Verfahren nach Anspruch 7 oder 8, **gekennzeichnet durch**
Zuführen des Schmierfluids **durch** mindestens ein Lager (15), das die rotierende Muffe (14) trägt.

10. Verfahren nach Anspruch 9, **gekennzeichnet durch**
Zuführen des Schmierfluids **durch** ein hinteres Lager (15b), das sich in einem hinteren Endbereich der rotierenden Muffe (14) und an einem Ende gegenüber relativ zu dem Werkzeug (7) befindet.

## Revendications

1. Machine de forage de roches comprenant :
un corps (13) ;
une queue (6) qui est montée sur le corps (13) au moyen d'au moins un premier palier (12) et laquelle queue (6) comprend une première extrémité et une seconde extrémité, la première extrémité étant pourvue de moyens de raccordement pour raccorder un outil de forage (7) ;
une première roue dentée (43) sur une surface externe de la queue (6) ;
au moins une douille rotative (14) autour de la queue (6) ;
une deuxième roue dentée (44) sur une surface interne de la douille rotative (14), la deuxième roue dentée (44) étant en contact de dents avec la première roue dentée (43) ;
une troisième roue dentée sur une surface externe de la douille rotative (14) ;
un dispositif rotatif (10) comprenant au moins un moteur rotatif pour générer une rotation et des éléments de transmission afin de transmettre la rotation à la troisième roue dentée ;
au moins un second palier (15) pour monter la douille rotative (14) à rotation à l'intérieur d'un espace de palier (16) dans le corps (13) ; et
un système de lubrification (23) comprenant au moins un conduit d'alimentation (25) pour acheminer un fluide lubrifiant sous pression au contact de dents entre la première roue dentée (43) et la deuxième roue dentée (44) ;
dans laquelle :
le contact des dents entre la première roue dentée (43) et la seconde roue dentée (44) comprend des surfaces de flanc opérationnelles (41) entre des dents opposées;
au moins une surface de flanc (41) dans chaque contact de dents est pourvue d'au moins une rainure (28) ; et
le conduit d'alimentation (25) du système lubrifiant est en liaison avec les rainures (28), permettant d'acheminer le fluide lubrifiant au contact de dents et de l'écouler dans la au moins une rainure (28) de la surface de flanc (41),
dans laquelle la rainure (28) sur la surface de flanc (41) est allongée et a des extrémités ;
**caractérisée en ce qu'**au moins une extrémité de la rainure (28) est ouverte ; et
le fluide lubrifiant fourni à la rainure (28) est agencé pour s'écouler (F) dans la rainure (28) vers la au moins une extrémité ouverte.

2. Machine de forage de roches selon la revendication 1, **caractérisée en ce que** :
le au moins un conduit d'alimentation (25) du système lubrifiant (23) est raccordé à l'espace de palier (16) entourant la douille rotative (14) ; et
le fluide lubrifiant est agencé pour lubrifier le au moins un second palier (15) de la douille rotative (14).

3. Machine de forage de roches selon la revendication 1 ou 2, **caractérisée en ce que** :
la douille rotative (14) comprend une première douille (14a) et une seconde douille (14b) ;
la seconde douille (14b) est agencée à l'intérieur de la première douille (14a) ;
il est prévu entre la première douille (14a) et la seconde douille (14b) des roues dentées pour transmettre la rotation entre les douilles ;
la troisième roue dentée se trouve sur la surface externe de la première douille (14a) ; et
la deuxième roue dentée (44) se trouve sur une surface interne de la seconde douille (14b).

4. Machine de forage de roches selon l'une quelconque des revendications précédentes, **caractérisée en ce que** :
le conduit d'alimentation (25) du système lubrifiant (23) est situé sur le second palier (15), ce qui permet d'acheminer le fluide lubrifiant à travers le second palier (15) de la douille rotative (14).

5. Machine de forage de roches selon la revendication 4, **caractérisée en ce que** :
la douille rotative (14) est pourvue de plusieurs conduits de fluide (40) pour acheminer le fluide lubrifiant du second palier (15) au contact de dents entre la première roue dentée (43) et la deuxième roue dentée (44).

6. Machine de forage de roches selon l'une quelconque des revendications précédentes, **caractérisée en ce que** :
les surfaces de flanc (41) des dents de la deuxième roue dentée (44) sont pourvues de ces rainures (28).

7. Procédé de lubrification d'une machine de forage de roches,
la machine de forage de roches (4) comprenant un corps (13) ; une queue (6) pour raccorder un outil de forage (7) ; une douille rotative (14) autour de la queue (6) ; un dispositif rotatif (10) pour produire une rotation ; des roues dentées pour transmettre la rotation du dispositif de rotation (10) à la douille rotative (14) et en outre à la queue (6) ; et
le procédé comprenant l'acheminement d'un fluide lubrifiant sous pression à un contact de dents entre les roues dentées de la queue (6) et de la douille rotative (14) ;
la fourniture d'au moins une surface de flanc (41) à chaque contact de dents avec au moins une rainure (28), dans lequel la rainure (28) de la surface de flanc (41) est allongée et a des extrémités, et dans lequel au moins une extrémité de la rainure (28) est ouverte ; et
la production d'un flux de fluide lubrifiant dans la au moins une rainure (28) du contact de dents entre les roues dentées et le maintien du flux au cours de la transmission de la rotation, de sorte que le flux du fluide lubrifiant lubrifie les surfaces de flanc opérationnelles (41) de dents des roues dentées et s'écoule dans la rainure (28) vers la au moins une extrémité ouverte.

8. Procédé selon la revendication 7, **caractérisé par** :
l'acheminement du fluide lubrifiant d'un système de lubrification séparé (23) à un espace de palier (16) dans le corps (13) et à l'intérieur duquel espace de palier (16) la douille rotative (14) est montée à rotation ; et
la lubrification au moyen du fluide lubrifiant d'au moins un palier (15) de la douille rotative (14).

9. Procédé selon la revendication 7 ou 8, **caractérisé par** :
l'acheminement du fluide lubrifiant à travers au moins un palier (15) supportant la douille rotative (14).

10. Procédé selon la revendication 9, **caractérisé par** :
l'acheminement du fluide lubrifiant à travers un palier arrière (15b) dans une partie d'extrémité arrière de la douille rotative (14) et qui se situe à une extrémité opposée par rapport à l'outil (7).
